(19) Europäisches Patentamt
European Patent Office
Office européen des brevets

(11) EP 2 674 211 A1

(12) EUROPEAN PATENT APPLICATION

(43) Date of publication:
**18.12.2013 Bulletin 2013/51**

(51) Int Cl.:
***B01D 69/12*** *(2006.01)*

(21) Application number: **12171998.3**

(22) Date of filing: **14.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
- **BASF SE**
  **67056 Ludwigshafen (DE)**
- **National University of Singapore**
  **Singapore 119077 (SG)**

(72) Inventor: **The designation of the inventor has not yet been filed**

(74) Representative: **Jacobi, Markus Alexander**
**Isenbruck Bösl Hörschler LLP**
**Patentanwälte**
**Eastsite One**
**Seckenheimer Landstraße 4**
**68163 Mannheim (DE)**

(54) **Composite membranes comprising a sulfonated polyphenylenesulfone and their use in forward osmosis processes**

(57) The present invention is directed to thin film composite membranes (TFC membranes) comprising a substrate layer (S) based on a sulfonated polyphenylenesulfone, and a polyamide film layer (F) and further to a method for their preparation. Furthermore, the present invention is directed to osmosis processes, in particular to forward osmosis (FO) processes, using said membrane.

EP 2 674 211 A1

## Description

The present invention is directed to thin film composite membranes (TFC membranes) comprising a substrate layer (S) based on a sulfonated polyphenylenesulfone, and a polyamide film layer (F) and further to a method for their preparation. Furthermore, the present invention is directed to osmosis processes, in particular to forward osmosis (FO) processes, using said membrane.

The development and application of membrane technologies (e.g. dialysis, membrane filtration such as nano-, ultra- and micro-filtration and osmosis processes) is one of the most significant recent advances in chemical, environmental, and biological process engineering.

In view of global water scarcity, particularly in drought-prone and environmentally polluted areas, one of the most important applications of osmosis processes using semi-permeable osmosis membrane is the purification of waste water or seawater. Considerable efforts have been put in providing novel methods of purifying wastewater or seawater at lower expenditure with less energy consumption. In this context, membrane based purification and separation processes have become more attractive in comparison to distillation processes.

Generally, the term osmosis describes a diffusion process, wherein solvent molecules move through a selectively permeable membrane (i.e. permeable to solvent but not to solute), which is separating at least two solutions of different solute concentration, into a solution with higher solute concentration. This diffusion process aims for equalization of the solute concentrations. The selectively permeable membrane used in osmosis process is also referred to as "semi-permeable" membrane or osmosis membrane.

Normally, osmosis membranes exhibit a molecular weight cut off (MWCO) in the range from 10 to 500 Da. The molecular weight cut off (MWCO) refers to the lowest molecular weight (given in Daltons) in which al least 80 %, preferably at least 90 %, of solute molecules are retained by the membrane.

In general, there are two osmosis process modes used in technical applications, namely the reverse osmosis (RO) and the forward osmosis (FO), wherein both osmosis processes utilize a selectively permeable membrane to separate water from dissolved solute molecules or ions.

In the case of reverse osmosis (RO), a hydraulic pressure as the driving force for the separation is employed, wherein the solute retains on the pressurized side of the membrane and the solvent passes through the membrane to the other side.

The forward osmosis (FO) employs the osmotic pressure as a driving force generated by a highly concentrated solution (so called "draw solution") to allow water to diffuse through a semi-permeable membrane from the so called "feed solution" (e.g. brackish water or seawater), which has a relatively lower salt concentration.

Forward osmosis (FO) offers some advantages over the reverse osmosis (RO) and thermal separation processes. For example, forward osmosis (FO) can operate without high hydraulic pressures which are necessary in the reverse osmosis process and high temperatures which are necessary in the distillation and may be detrimental to the feed solution. Less energy is required for the FO process compared to other separation processes. The forward osmosis also offers the advantages of high rejection of a wide range of contaminants and lower membrane-fouling than traditional reverse osmosis processes.

It is known that FO membranes can be utilized for example for water reuses, seawater desalination and concentration of pharmaceutical solutions. The major problems in use of forward osmosis today are e.g. the limited number of commercially available FO membranes, insufficient water permeation and separation performance of known FO membranes and the lack of desirable draw solutions depended on the intended use.

Membranes which are designed for reverse osmosis processes can often not be applied in the forward osmosis process due to their thick and dense support layer, which is necessitated to withstand high pressure in the reverse osmosis process and which causes decreased water flux and high salt leakage in the FO process. In this regard, an effective support layer (substrate layer) for FO membranes should be as thin as possible, highly porous, and provide a direct path from the draw solution to the active surface of the membrane.

In the literature, several flat sheet membranes based on cellulose triacetate (CTA) suitable for forward osmosis are described. They are used in applications of water purification for military, emergency relief, and recreational purposes (see T.Y. Cath, A.E. Childress, "Forward osmosis: Principles, applications, and recent developments". J. Membr. Sci. 281 (2006) 70). These cellulose triacetate membranes exhibit a low pure water permeability and salt rejection.

The publication Yip et al. (M. Elimelech,"High Performance thin-film composite forward osmosis membranes", Environ. Sci. Technol. 44 (3812) 2010) describes thin film composite (TFC) membranes comprising a polysulfone support for forward osmosis application. However, said support layer substrate consists of finger like macrovoid which may reduce the membrane integrity in the long term process of use in osmosis processes, in particular in forward osmosis processes.

The use of polyarylethers and sulfonated polyarylethers for the production of membranes, such as dialysis membranes or membranes in fuel cells, is described in the state of art. Document WO 2009/030620 describes blends of branched polyarylethers and hydrophilic polymers for production of hollow fiber membranes used as dialysis filters.

The document WO 2010/142585 describes aromatic polyarylenether block copolymers and their use for the production of polyelectrolyte membranes for fuel cells or for water treatment.

In the publication N. Widjojo et al. (Journal of Membrane Science, 338, 2011, 214-223) and in PCT/EP2010/057591 TFC-membranes based on a substrate layer, which comprise a blend of non-sulfonated polyarylether and sulfonated polyarylether, are described, wherein the sulfonated polyarylethersulfone comprises from 2 to 40 wt% sulfonated recurring units (based on the total weight of sulfonated polymer). Particularly, sulfonated polyethersulfone/ polyphenylensulfone copolymers are used as sulfonated polyarylether. The content of sulfonated polymer in the polymer blend is discussed in relation to membrane performance. The TFC-membranes described in said documents have improved water flux and sufficient salt rejection. One disadvantage of the membranes described in these documents is the need to adjust the amounts of sulfonated and non-sulfonated polymer, which requires at least two starting materials and an additional process step in the production of the substrate layer, i.e. the production of the polymer blend.

However, there is a high permanent need of novel, superior forward osmosis membrane systems suitable for several applications, which shows high water flux, sufficient salt rejection and excellent chemical and mechanical resistance. Also long-term stability is an important feature. Furthermore, the method of membrane production, in particular the production of the substrate layer, should be easy (including as less steps as possible) and cost-effective.

One object of the invention is to provide novel membranes suitable in particular for forward osmosis (FO) processes which can overcome the disadvantages of the state of the art, in particular having superior properties (e.g. high water flux) in use for forward osmosis.

It was surprisingly found that the composite membrane comprising a sulfonated polyphenylenesulfone, having a content of sulfonated units in a range of 1 to 10 mol-% (based on the sulfonated polymer), in the substrate layer give rise to FO-membranes with superior performance, especially high water flux in the PRO and FO mode, in particular using seawater as feed.

In particular it was found that a TFC membrane substrate layer can be formed comprising said sulfonated polyphenylenesulfone as only building polymer, in particular a substrate layer can be formed consisting of said polyphenylenesulfone. Compared to the known sulfonated materials (e.g. synthesized via post-sulfonation method) which requires blending with other non-sulfonated polymer to form asymmetric membranes, the sulfonated polyphenylenesulfones of the present invention can alone form free standing asymmetric membranes without blending with other polymer.

The present invention is directed to a composite membrane comprising (or preferably composed of):

a) at least one substrate layer (S) comprising (or consisting of)
at least one sulfonated polyphenylenesulfone P1, which comprises from 1 to 10 mol-%, preferably from 2 to 7 mol-%, more preferably from 2 to 5 mol-%, based on the total polymer P1, of recurring units comprising at least one sulfonic acid group;

b) at least one film layer (F) comprising (or consisting of) at least one polyamide.

The inventive composite membrane shows the following desired characteristics,
which are in particular important for use in forward osmosis processes:

- thin membrane with sufficient or high chemical and mechanical stability (e.g. suitable using in pressure retarded osmosis);
- substrate layer (S) with minimum porosity, macrovoid-free structure and high hydrophilicity;
- enhanced water flux and reduced membrane fouling, especially when using seawater as feed;
- (nearly) defect-free semi-permeable active layer for high solute rejection.

The inventive membrane (thin film composite (TFC) membrane) is particularly suitable for forward osmosis applications. The newly developed membranes are designed particularly for seawater desalination, water reclamation from wastewaters, the osmotic concentration of food and pharmaceutical solutions via forward osmosis processes.

The hydrophilic and macrovoid free membrane substrate layer (S) of the inventive composite membrane can enhance the membrane integrity. Further, the macrovoid-free structure and high content of the sulfonated units in the substrate polymer results in superior improved water flux and low salt leakage. In addition, the membrane fouling will be reduced in particular due to the hydrophilic nature of thin film layer (F) and substrate layer (S).

The term "macrovoid" in terms of the present invention means pores (e.g. elongated pores) with a pore size of more than 10 micrometer (> 10 micrometer). Macrovoids can often be found in asymmetric polymeric membranes

prepared via phase-inversion techniques.

A sulfonated polyphenylenesulfone P1 in terms of the present invention is a polymer which comprises sulfonated recurring units and non-sulfonated recurring units, wherein the amount of sulfonated recurring units (based on the total recurring units of polymer P1) is in the range of 1 to 10 mol-%, preferably 2 to 7 mol-%, more preferably 2 to 5 mol-%, based on the total weight of the polymer P1.

The sulfonated repeating unit or the sulfonated monomeric unit carry at least one, preferably 1 to 4, more preferably 1 or 2, sulfonic acid functional group (also referred to as sulfonate group or sulfo group) according to formula $-SO_3H$. Preferably, the at least one sulfonic acid group is directly attached to an aromatic ring of the polyphenylenesulfone units. The sulfonic acid groups may be in form of free acid $-SO_3H$ or in deprotonated form in dependency of the conditions. Sulfonic acid groups in terms of the present invention also encompass corresponding metal salts of the sulfonated group $-SO_3M$, wherein M is a metal ion, preferably an alkali metal ion, more preferably M = Na, K or Li. According to the present invention the at least one sulfonated polyphenylenesulfone P1 comprises typically from 1 to 10 mol-%, based on the total polymer P1, sulfonated recurring units.

A monomer unit(s) (also referred to as structural unit(s)) of a polymer in terms of the present invention is/are the group(s) of atoms in a polymer derived from a monomer molecule which is used in the preparation of the polymer. A repeating unit or repeating units of a polymer in terms of the present invention is/are the part/parts of the polymer chain whose repetition would produce the complete polymer except the end groups by linking the repeating unit or repeating units together in any order successively along the chain. There may be more that one monomer unit in a repeating unit, i.e. when at least two different monomers are polymerized.

In particular, the inventive composite membrane comprises at least one substrate layer (S) comprising (or consisting of):

i) 50 to 100 wt%, preferably 50 to 99.5 wt%, often 80 to 95 wt% of the at least one sulfonated polyphenylenesulfone P1; and

ii) 0 to 50 wt%, preferably 0.5 to 50 wt%, often 5 to 20 wt%, of at least one other polymer P2.

The polymer P2 can be selected from the group consisting of polyarylether, polyethersulfone (PESU), polyphenylenesulfone (PPSU), polysulfone (PSU), polyacrylonitrile (PAN), polybenzimidazole (PBI), polyetherimide (PEI); polyphenyleneoxide (PPO), polyvinylidenfluoride (PVDF), polyimide (PI), polyetherketone (PEK), polyetheretherketone (PEEK) and copolymers composed of at least two monomeric units of said polymers. Suitable polymers P2 are for example described in PCT/EP2010/057591.

More preferably the at least one polymer P2 is selected from polyarylether, polyethersulfone (PESU), polysulfone (PSU), and copolymers composed of at least two recurring units of said polymer. The polymer P2 can also be selected from sulfonated polymers selected from the group consisting of polyarylether, polyethersulfone (PESU), polysulfone (PSU), polyacrylonitrile (PAN), polybenzimidazole (PBI), polyetherimide (PEI); polyphenyleneoxide (PPO), polyvinylidenfluoride (PVDF), polyimide (PI), polyetherketone (PEK), polyetheretherketone (PEEK) and copolymers composed of at least two monomeric units of said polymers. Suitable polymers P2 are for example described in PCT/EP2010/057591.

More preferably the at least one polymer P2 is selected from sulfonated polysulfone (sPSU) and sulfonated polyethersulfone (sPESU).

In a preferred embodiment the inventive composite membrane (TFC membrane) comprises at least one substrate layer (S), wherein the at least one sulfonated polyphenylenesulfone P1 is the only polymer contained in the substrate layer (S). Preferably, the substrate layer (S) comprises 50 to 100 wt%, preferably 50 to 99.5 wt%, often 80 to 95 wt%, more preferably 95 to 99.5 wt%, of the at least one sulfonated polyphenylenesulfone P1 (based on the total weight of the substrate layer). More preferable the at least one substrate layer (S) is composed of at least one sulfonated polyphenylenesulfone P1.

The at least one substrate layer (S) may further comprise from 0 to 20 wt%, preferably from 0.001 to 5 wt%, more preferably from 0.001 to 1 wt% of polymeric or non-polymeric further additive, for examples at least one further additive selected from the group consisting of ethylene glycol, diethylene glycol, polyethylene glycol, glycerol, water, methanol, ethanol, isopropanol, polyvinylpyrrolidon, metal halide.

In an embodiment the inventive composite membrane comprises:

a) at least one substrate layer (S) comprising:

i) 50 to 100 wt%, preferably 50 to 99.5 wt%, often 80 to 95 wt% of the at least one sulfonated polyphenylenesulfone P1, wherein from 1 to 10 mol-%, preferably 2 to 7 mol-%, more preferably 2 to 5 mol-%, of the recurring units (based on the total polymer P1) comprise at least one sulfonic acid group;

ii) optionally 0 to 50 wt%, preferably 0.5 to 50 wt%, often 5 to 20 wt%, of at least one other polymer P2; selected from sulfonated or non-sulfonated polyarylether, polyethersulfone (PESU), polysulfone (PSU), and copolymers composed of at least two recurring units of said polymer; and

iii) optionally 0 to 20 wt%, preferably from 0.001 to 5 wt%, more preferably from 0.001 to 1 wt% of at least one further additive selected from the group consisting of ethylene glycol, diethylene glycol, polyethylene glycol, glycerol, water, methanol, ethanol, isopropanol, polyvinylpyrrolidon, metal halide;

b) at least one film layer (F) comprising at least one polyamide.

The preferred sulfonated polyphenylenesulfone (PPSU) P1 which is used for the substrate layer (S) are described in the following. Preferably the at least one polyphenylenesulfone P1 comprises (or is composed of) recurring units according to formula (1)

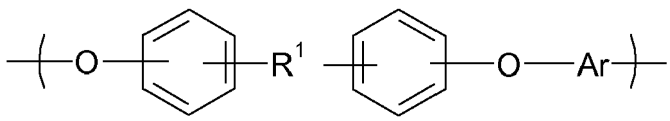

(1)

wherein

$R^1$ is C=O or $-SO_2-$; preferably $-SO_2-$

Ar is a divalent aromatic radical having 10 to 20, preferably 10 to 12, aromatic ring carbon atoms, wherein the aromatic radical is optionally substituted by one or more groups selected from $C_1$-$C_{12}$-alkyl, $C_6$-$C_{18}$ aryl, $C_1$-$C_{12}$-alkoxy, halogen (e.g. F, Cl, Br or J) and sulfonic acid group.

Preferably the polyphenylenesulfone P1 comprises (or is composed of) recurring units according to formula (2):

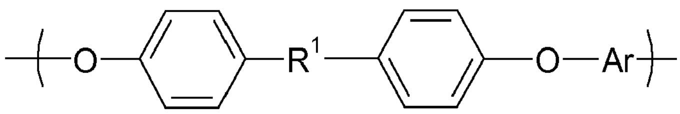

(2)

wherein $R^1$ and Ar are as defined above.

The aromatic rings of the recurring unit according to formula (1) and (2) may further carry one or more same or different substituents selected from $C_1$-$C_{12}$-alkyl, $C_6$-$C_{18}$ aryl, $C_1$-$C_{12}$-alkoxy, halogen and sulfonic acid group. Suitable substituents may be lower alkyl substituents, like methyl or ethyl.

According to the present invention Ar represents divalent, mono- or polynucleated, in particular mono- or dinucleated aromatic ring groups which optionally may substituted by one or more groups selected from $C_1$-$C_{12}$-alkyl, $C_6$-$C_{18}$ aryl, $C_1$-$C_{12}$-alkoxy, halogen and sulfonic acid group. According to the present invention Ar is a divalent aromatic radical containing 10 to 20, preferably 10 to 12, mosre preferably 12 aromatic ring carbon atoms. Two or more aromatic ring groups may be condensed or, more preferably non-condensed rings, or may be linked via a group selected from a C-C single bond or an ether (-O-) or an a alkylene bridge, or halogenated alkylene bridge or sulfone group ($-SO_2-$).

Preferably Ar can be selected from bisphenylenes, naphthylenes, and phenanthrylens. Also preferably, the group Ar can be selected from the following residues:

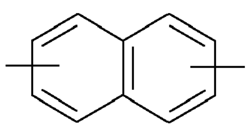

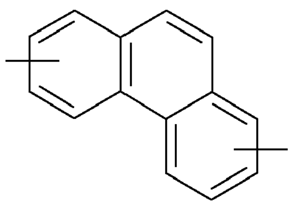

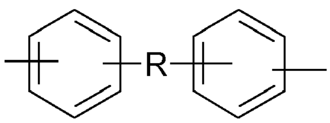

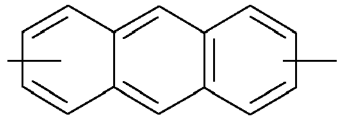

with R selected from a C-C single bond or an ether (-O-) or an a alkylene bridge, or halogenated or alkylene bridge.

The radical Ar can also have a meaning as given in EP-A 1 394 879 for the structures of the general formula (2) in this document.

The aromatic radical Ar is preferably a polycyclic aromatic radical, preferably a biphenyl radical of the general formula (3)

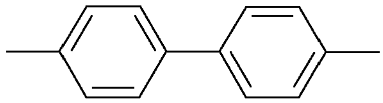

(3).

In a preferred embodiment the substrate layer (S) of the inventive composite membrane comprises (or is composed of) at least one sulfonated polymer P1 which comprises (or is composed of) recurring units according to following formula (2):

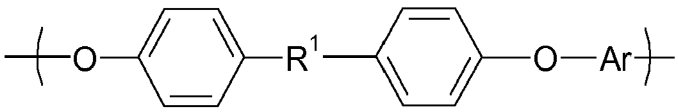

(2)

wherein:

$R^1$ is $-SO_2-$; and

Ar is a biphenyl radical of the formula (3),

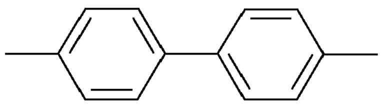

(3)

which is optionally substituted by one or more groups selected from $C_1$-$C_{12}$-alkyl, $C_6$-$C_{18}$ aryl, $C_1$-$C_{12}$-alkoxy, halogen (e.g. F, Cl, Br or J) and sulfonic acid group; B12/73768EP

wherein the aromatic rings of the recurring unit according to formula (2) may further carry one or more same or different substituents selected from $C_1$-$C_{12}$-alkyl, $C_6$-$C_{18}$ aryl, $C_1$-$C_{12}$-alkoxy, halogen and sulfonic acid group;

and wherein from 1 to 10 mol-%, preferably 2 to 7 mol-%, more preferably 2 to 5 mol-%, of the recurring units (based on the total polymer P1) comprise at least one sulfonic acid group.

Preferably the at least one sulfonated polyphenylenesulfone P1 comprises (or is composed of)

at least one non-sulfonated repeating unit according to formula (4)

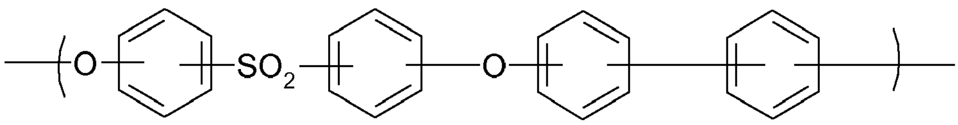

(4)

and at least one sulfonated repeating unit according to formula (5)

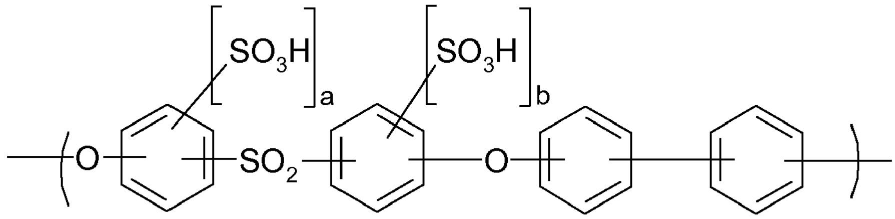

(5)

with

a and b independently of one another, are an integer from 0 to 4, preferably from 0 to 2, with the proviso that both a and b are not 0. Preferably a and b are 1.

More preferably the at least one sulfonated polyphenylenesulfone P1 comprises (or is composed of) at least one non-sulfonated repeating unit of formula (4a)

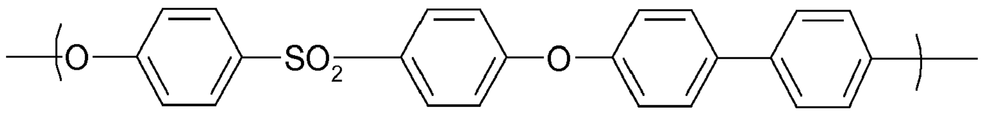

(4a)

and at least one sulfonated repeating unit of formula (5a)

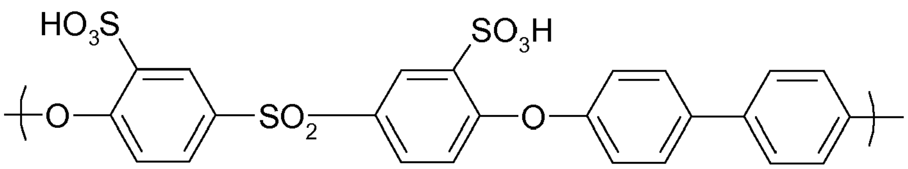

(5a)

In particular the sulfonated repeating units of P1, in particular repeating units according to formulae (5) or (5a), are contained in a molar ratio of 2 to 10 mol-%, preferably from 2 to 7 mol-%, more preferably from 2 to 5 mol-%, based on the total mole number of repeating units, in particular the total mole number of repeating units according to formulae (4) and (5), or (4a) and (5a), respectively.

In a preferred embodiment the sulfonated repeating units of P1 (for example repeating units according to formulae (5) or (5a)) are contained in a molar ratio of about 2.5 mol-% or about 5 mol-%, based on the total mole number of repeating units (for example the total mole number of repeating units according to formulae (4) and (5), or (4a) and (5a), respectively).

In particular the at least one polyphenylenesulfone P1 is obtainable by polymerizing of at least one non-sulfonated monomer and at least one sulfonated monomer.

Preferably the substrate layer (S) comprises (preferably is composed of) a polyphenylenesulfone (P1) which is obtainable by polymerizing of

i) at least one non-sulfonated monomer of the general formulae M1a and/or M2a

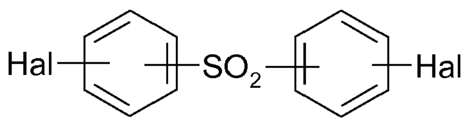

(M1a)

HO—Ar—OH (M2a)

wherein

Ar is a divalent aromatic radical having 10 to 20, preferably 10 to 12, aromatic ring carbon atoms, wherein the

aromatic radical is optionally substituted by one or more groups selected from $C_1$-$C_{12}$-alkyl, $C_6$-$C_{18}$ aryl, $C_1$-$C_{12}$-alkoxy, and halogen (e.g. F, Cl, Br or J); and

Hal is F, Cl, Br or J; preferably Cl

and

ii) at least one sulfonated monomer of the general formulae M1 b and/or M2b

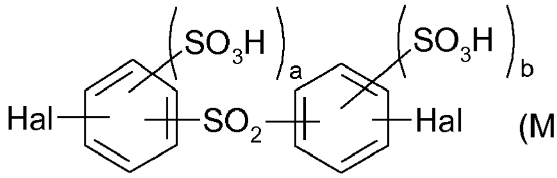

(M1b)

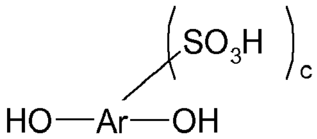

(M2b)

wherein

Ar is a divalent aromatic radical having 10 to 20, preferably 10 to 12, aromatic ring carbon atoms, wherein the aromatic radical is optionally substituted by one or more groups selected from $C_1$-$C_{12}$-alkyl, $C_6$-$C_{18}$ aryl, $C_1$-$C_{12}$-alkoxy, and halogen (e.g. F, Cl, Br or J);

Hal is F, Cl, Br or J; preferably Cl;

a, b and c are independently of one another, are an integer from 0 to 4, preferably 0 to 2, with the proviso that a + b + c is not 0.

Examples of suitable aromatic dihalides (M1a) include: bis(4-chlorophenyl)sulfone, bis(4-fluorophenyl) sulfone, bis(4-bromophenyl) sulfone, bis(4-iodophenyl) sulfone, bis(2-chlorophenyl) sulfone, bis(2-fluorophenyl) sulfone, bis (2-methyl-4-chlorophenyl) sulfone, bis(2-methyl-4-fluorophenyl) sulfone, bis(3,5-dimethyl-4-chlorophenyl) sulfone, bis(3,5-dimethyl-4-flurophenyl) sulfone and corresponding lower alkyl substituted analogs thereof. They may be used either individually or as a combination of two or more monomeric constituents thereof. Particular examples of dihalides are bis (4-chlorophenyl) sulfone (also designated (4,4'-dichlorophenyl) sulfone; DCDPS) and bis(4-fluorophenyl) sulfone.

Examples of suitable dihydric aromatic alcohols (M2a) which are to react with the aromatic dihalide are: 1,5-dihydroxynaphthalene, 1,6-dihydroxynaphthalene, 1,7-dihydroxynaphthalene, 2,7-dihydroxynaphthalene, 4,4'-bisphenol, 2,2'-bisphenol, 4,4'-dihydroxybiphenyl, bis(4-hydroxyphenyl) ether, bis(2-hydroxyphenyl) ether, 2,2-bis(4-hydroxyphenyl)propane, 2,2-bis(3-methyl-4-hydroxy-phenyl)propane, 2,2-bis(3,5-dimethyl-4-hydroyphenyl)propane, bis(4-hydroxyphenyl)methane, and 2,2-bis(3,5-dimethyl-4-hydroxypenyl)hexafluoropropane. Preferred of them are 4,4'-bisphenol, 2,2'-bisphenol, 4,4'-dihydroxybiphenyl, bis(4-hydroxyphenyl) ether, bis(2-hydroxyphenyl) ether, 2,2-bis(4-hydroxyphenyl)propane, 2,2-bis(3-methyl-4-hydroxyphenyl)propane, 2,2-bis(3,5-dimethyl-4-hydroyphenyl)propane, bis(4-hydroxyphenyl)methane, and 2,2-bis(3,5-dimethyl-4-hydroxypenyl)hexafluoropropane. They may be used either individually or as a combination of two or more monomeric constituents M2a.

Compounds M1b and M2b are the mono- or poly-sulfonated equivalents of the above-described non-sulfonated monomeric constituents M1a and M1b.

Preferably the M1 a monomer is a dihalodiphenylsulfone according to formula M(11):

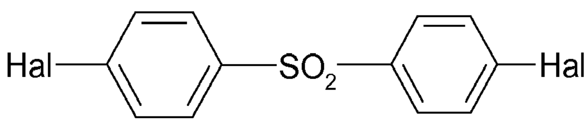

(M11)

wherein Hal is as defined above.

Preferably the M2a Monomer is 4,4'-dihydroxybiphenyl according to formula M(21):

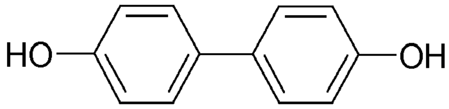

(M21).

Preferably the M1 b monomer is a 5,5'-disulfonic acid-dihalodiphenylsulfone according to formula M (12):

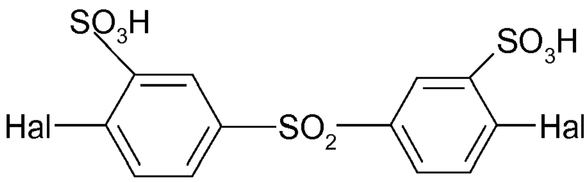

(M12),

wherein Hal is as defined above.

Preferably the M2b monomer is a disulfonic acid- 4,4'-dihydroxybiphenyl according to formula M(22):

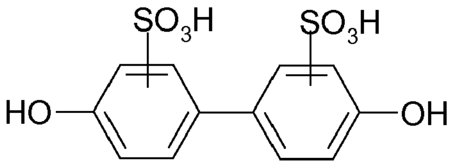

(M22).

More preferably the M2b monomer is 3,3'-disulfonic acid-4,4'-dihydroxybiphenyl according to formula M (221):

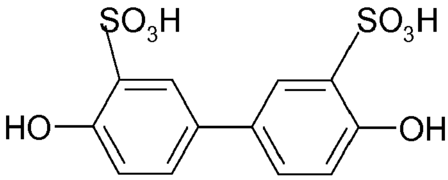

(M221).

In particular the molar proportion of sulfonated monomers M1 b and/or M2b is in the range of 1 to 10 mol-%, preferably from 2 to 7 mol-%, more preferably from 2 to 5 mol-%, based on the total mole number of M1a, M1b, M2a and M2b. In particular the molar ratio of (M1a +M1b) : (M2a +M2b) is about 0.95 to 1.05, in particular 0.97 to 1.03.

The said sulfonated polyphenylenesulfone (P1) may be a block copolymer or a statistical copolymer. Furthermore the sulfonated polyphenylenesulfone P1 has a molecular weight Mw in the range of 50.000 to 150.000, in particular 70.000 to 100.000 g/mol determined by GPC in DMAc. Molecular weights of polymers are, unless otherwise stated as Mw values, in particular determined via GPC in DMAc (dimethylacetamide). In particular, the GPC measurements were performed with dimethylacetamide (DMAc) containing 0.5 wt -% lithium bromide. Polyester copolymers were used as column material. The calibration of the columns was performed with narrowly distributed PMMA standards. As flow rate 1 ml / min was selected, the concentration of the injected polymer solution was 4 mg / ml. If the Mw is above 150.000, the solution viscosity of the polymer is too high. If the Mw is below 50.000, the obtained membrane shows limited mechanical strength.

The preparation of sulfonated polyphenylenesulfone P1 can be carried out via direct sulfonation in the monomer or post sulfonation method of a non-sulfonated polymer or copolymer as described e.g. in WO 2010/145052. Preferably the sulfonated polyphenylenesulfone P1 is obtained via direct sulfonation, i.e. by polymerization of at least one sulfonated monomer. In a preferred embodiment the at least one polyphenylenesulfone P1 is obtainable by polymerizing of at least one non-sulfonated monomer and at least one sulfonated monomer.

The preparation of the sulfonated polyphenylenesulfone P1 is generally performed by applying standard methods of polymer technology. In general, the reagents and monomeric constituents as used herein are either commercially available or well known from the prior art or easily accessible. Preferably the sulfonated polyphenylenesulfone P1 is produced by reacting a mixture of monomers comprising monomers of the type M1a and M2a and at least one sulfonated

variant of the Type M1b and M2b. In general, the sulfonated polyphenylenesulfone P1 can be synthesized, for example by reacting a dialkali metal salt of an aromatic diol and an aromatic dihalide as described for example in Johnson et al., J. Polym. Sci. A-1, Vol. 5, 2375 (1967).

The sulfonated monomeric compounds M1b and M2b are either well-known in the art or easily accessible via routine methods of organic synthesis. For example sulfonated aromatic dihalides, such as sodium 5,5'-sulphonyl bis(2-chlorobenzenesulfonate) (the 5,5'-bis sulfonated analog of DCDPS) are, for example, disclosed in Ueda et al., J. Polym. Sci., Part A: Polym. Chem. Vol. 31 853 (1993).

The dialkali metal salt of said dihydric aromatic phenol is obtainable by the reaction between the dihydric aromatic alcohol and an alkali metal compound, such as potassium carbonate, potassium hydroxide, sodium carbonate or sodium hydroxide.

The reaction between the dihydric aromatic alcohol dialkali metal salt(s) and the aromatic dihalide(s) and a sulfonated monomer as defined above is carried out as described in the art (see for example Harrison et al, Polymer preprints (2000) 41 (2) 1239). For example, in a polar solvent such as dimethyl sulfoxide, sulfolane, N-methyl-2-pyrrolidone, 1,3-dimethyl-2-imidazolidinone, N,N-dimethylformamide, N,N-dimethylacetamide, and diphenyl sulfone, or mixtures thereof or mixtures of such polar solvents with apolar organic solvents like toluene may be applied.

The reaction temperature is typically in the range of 140 to 320 °C or in particular 160 to 250°C. The reaction time may be in the range of 0.5 to 100 h, or in particular 2 to 15 h.

Reaction of the monomeric constituents, in particular, of the aromatic dihalides M1a and M1b and the dihydric aromatic alcohol alkali metal salts of M2a and optionally M2b may also be performed as described in Geise, G.M., et al J. Poly. Sci, Part B: Polym Phys.: Vol 48, (2010), 1685.

Typically, the substrate layer (S) has a thickness in the range from 1 to 200 μm, preferably from 10 to 100 μm, more preferably from 10 to 50 μm.

The present invention is also directed to a composite membrane, which comprises at least one film layer (F) comprising (or consisting of) at least one polyamide, preferably an aromatic polyamide (aramide). Preferably the invention is directed to a composite membrane as described above, wherein the at least one polyamide is an aromatic polyamide (aramide), in which at least 85 % of amide groups (CO-NH) are attached directly to two aromatic rings. Preferably the polyamide according to the present invention is poly-metaphenylene isophtalamide (MPIA) and/or a poly-paraphenylene terephtalamide (PPTA).

The film layer (F) can be obtained via reaction of at least one polyamine monomer having at least two amine groups, and at least one polyacylhalide monomer having at least two acyl halide groups on the surface of the substrate layer. Suitable polyamine monomer and polyacylhalide monomer are described below in connection with the method for preparation of composite membrane.

The film layer (F) has preferably a film thickness in the range from 10 to 500 nm, preferably from 50 to 300 nm, more preferably from 70 to 200 nm.

Furthermore, the present invention relates to a method for preparation of a composite membrane, which comprises at least one substrate layer (S) and at least one film layer (F), comprising the following steps:

a) preparing a polymer composition (P) comprising:

i) at least one sulfonated polyphenylenesulfone P1, which comprises 1 to 10 mol-%, preferably 2 to 7 mol-%, more preferably 2 to 5 mol-%, based on the total polymer P1 recurring units comprising at least one sulfonic acid group;

ii) at least one solvent S1, preferably selected from the group consisting of N-methylpyrrolidone, N-dimethylacetamide, dimethylsulfoxide, dimethylformamide, triethylphosphate, tetrahydrofuran, 1,4-dioxane and methylethyl ketone;

iii) optional at least one further additive selected from the group consisting of ethylene glycol, diethylene glycol, polyethylene glycol, glycerol, water, methanol, ethanol, isopropanol, polyvinylpyrrolidon, metal halide;

b) separating the polymer P1 from the solvent S1 to form a substrate layer (S);

c) bringing the substrate layer (S) into contact with a composition A1 comprising at least one polyamine monomer having at least two amine groups and at least one solvent S2;

d) bringing the substrate layer (S) into contact with a composition A2 comprising at least one polyacylhalide monomer having at least two acyl halide groups and at least one solvent S3 to form a film layer (F) onto the substrate layer (S), wherein a composite membrane is obtained.

The above described method provides a reliable and easy method for preparation of forward osmosis membranes, wherein the obtained composite membranes exhibit superior properties in forward osmosis application, in particular improved water flux and sufficient or improved (i.e. reduced) salt leakage and sufficient mechanical stability.

The sulfonated polyphenylenesulfone as membrane substrate layer (S) can induce hydrophilic property and achieve macrovoid free morphology while retaining membrane's mechanical strength. The resultant TFC-FO membranes with macrovoid free morphology can achieve a high water flux in forward osmosis. In this regards, the new developed forward osmosis membranes shows great potential to be applied in seawater desalination, waste water treatment, pharmaceutical and juice concentration, power generation as well as potable water reuse in space.

Preferred embodiments of at least one sulfonated polyphenylenesulfone P1 are described above in connection with inventive composite membrane.

The at least one solvent S1 is particularly selected from the group consisting of N-methylpyrrolidone, N-dimethylacetamide, dimethylsulfoxide, dimethylformamide, triethylphosphate, tetrahydrofuran, 1,4-dioxane and methyl ethyl ketone, preferably the at least solvent S1 is N-methyl pyrrolidone.

Preferably the present invention is directed to a method for preparation of a composite membrane as described above, wherein the polymer composition (P) comprises:

i) 5 to 25 wt%, preferably from 7.5 to 22,5 wt%, of at least one sulfonated polyphenylenesulfone P1;

ii) 75 to 95 wt%, preferably from 77.5 to 92.5 wt%, of at least one solvent S1 selected from the group consisting of N-methylpyrrolidone, N-dimethylacetamide, dimethylsulfoxide, dimethylformamide, triethylphosphate, tetrahydrofuran, 1,4-dioxane, and methyl ethyl ketone;

iii) optionally, 0 to 20 wt %, preferably from 0.1 to 15 wt% of at least one further additive selected from the group consisting of ethylene glycol, diethylene glycol, polyethylene glycol, glycerol, water, methanol, ethanol, isopropanol, polyvinylpyrrolidon, metal halide.

The weight percent given above in connection with the polymer composition (P) is based on the weight of the whole polymer composition (P).

Step b) of the present invention is directed to separating the sulfonated polyphenylenesulfone P1 from the solvent S1 to form a substrate layer (S).

In a preferred embodiment the separating of the sulfonated polyphenylenesulfone P1 from the solvent S1 in step b is effected by the following steps:

- applying the polymer composition (P) onto a support;

- adding a coagulation composition (C) comprising at least one $C_1$-$C_{12}$ aliphatic alcohol and/or water and/or at least one further additive selected from the group consisting of ethylene glycol, diethylene glycol, polyethylene glycol, glycerol, water, methanol, ethanol, isopropanol, polyvinylpyrrolidon, metal halide to the polymer composition (P) by forming the substrate layer (S).

In principle the form of composite membrane can vary, in which case the membrane is particularly present in form of a flat membrane or in form of a fiber, e.g. a hollow fiber. Preferably, the membrane according to the present invention is in form of flat membrane. When the method of the present invention is used to produce hollow fiber membranes, step b) is preferably conducted by means of wet spinning.

The coagulation composition used in the method is preferably a liquid which is fully miscible with the solvent S1 with the proviso that the sulfonated polyphenylenesulfone P1 is insoluble or partially insoluble in the coagulation composition (C).

In particular the coagulation composition comprises (or preferably is composed of) at least one aliphatic $C_1$ - $C_6$ alcohol or water or mixtures thereof. Preferably the coagulation composition comprises at least one liquid selected from the group consisting of water, methanol, ethanol and isopropanol. In a further preferred embodiment water is used as coagulation composition (C).

Step c) and d) of the present invention are directed to bringing the substrate layer (S) into contact with a composition A1 comprising at least one polyamine monomer and with a composition A2 comprising at least one polyacylhalide monomer to form a film layer (F) onto the substrate layer (S), wherein a composite membrane is obtained.

Preferably the step c) and d) of inventive method, in which the polyamide film layer (F) is formed, is carried out by so called interfacial polymerization. Interfacial polymerization can form an ultrathin active layer exhibiting high water flux. The interfacial polymerization reaction generally takes place very fast on the organic side, and produces a defect-free ultrathin film near the interface. As a result, the membrane production cost will be greatly reduced.

A polyamine monomer in terms of the present invention is a compound having at least two amine groups (preferably two or three amine groups). The polyamine monomer has typically at least two amine groups selected from primary or secondary amine groups. Preferably a polyamine monomer having at least two primary amine groups is employed in the inventive method.

In one embodiment, the at least one polyamine monomer is selected from the group consisting of phenylenediamine, phenylenetriamine, cyclohexane triamine, cyclohexane diamine, piperazine and bi-piperidine.

Preferably, the polyamine monomer is an aromatic polyamine monomer comprising at least two amine groups, wherein the amine groups are directly attached to an aromatic ring.

Typically the aromatic ring is an aromatic ring system comprising less than three aromatic rings, preferably the aromatic ring is phenyl. Preferably the at least one polyamine monomer is selected from phenylendiamine. Preferably at least one polyamine monomer is metaphenylendiamine (MPD).

The at least one solvent S2 is preferably a polar solvent. Preferably, the at least one solvent S2 is selected from water and mixtures of water with at least one aliphatic $C_1$ - $C_6$ alcohol. Preferably an aqueous solution of polyamine monomer is used according to the present invention, wherein the aqueous solvent comprises at least 50 wt%, preferably at least 70 wt%, preferably at least 90 wt%, more preferably at least 99 wt % water.

In a preferred embodiment the composition A1 comprises from 0.5 to 5 wt% of at least one polyamine monomer selected from the group consisting of phenylenediamine, phenylenetriamine, cyclohexane triamine, cyclohexane diamine, piperazine, and bi-piperidine and at least one solvent S2 comprising at least 50 wt% water (based on the total weight of solvent S2).

A polyacylhalide monomer in terms of the present invention is a compound having at least two acyl halide (also known as an acid halide) groups, wherein an acyl halide group is derived from a carboxylic acid group by replacing a hydroxyl group with a halide group. The halide may be selected from fluorine, chlorine, bromine or iodine. Preferably the polyacylhalide monomer is a polyacylchloride.

Preferably an aromatic polyacylhalide comprising at least two acyl halide groups (preferably two or three acyl halide groups) is employed in the inventive method, wherein the acyl halide groups are directly attached to an aromatic ring. Typically the aromatic ring is an aromatic ring system comprising less than three aromatic rings. In particular the aromatic ring is phenyl, biphenyl, naphthyl, preferably phenyl. Preferably the at least one polyacylhalide is selected from acyl halides based on aromatic polycarboxylic acids, e.g. phthalic acid, isophthalic acid (meta-phthalic acid), terephthalic acid (para-phthalic acid). Preferably the at least one polyacylhalide is selected from phthaloyl chloride (1,2-benzenedicarbonyl chloride), isophthaloyl chloride (1,3-benzenedicarbonyl chloride), terephthaloyl chloride (TCL, 1,4-benzenedicarbonyl chloride), and trimesoyl chloride (TMC, 1,3,5-benzene-tri-carbonyl-trichloride).

The at least one solvent S3 is preferably a hydrocarbon solvent. Preferably the at least one solvent S3 is selected from the group consisting of $C_1$-$C_{12}$ alkane, $C_6$-$C_{12}$ cycloalkane, isoparaffinic liquid (z.B. isopar®), $C_6$-$C_{12}$ arene (e.g. benzene, toluene).Preferably, the at least solvent S3 is selected from the group consisting of hexane, cyclohexane, heptane and benzene. More preferably n-hexane is used as solvent S3.

In a preferred embodiment the composition A2 comprises from 0.01 to 4 wt% of at least one polyacylhalide monomers selected from the group consisting of phthaloyl chloride (1,2-benzenedicarbonyl chloride), isophthaloyl chloride (1,3-benzenedicarbonyl chloride), terephthaloyl chloride (TCL, 1,4-benzenedicarbonyl chloride), and trimesoyl chloride (TMC, 1,3,5-benzene-tri-carbonyl-trichloride) and at least one solvent S3, preferably at least one hydrocarbon solvent S3.

In particular the invention is directed to a method for preparation of a composite membrane as described above, wherein bringing the substrate layer (S) into contact with a composition A1 and/or A2 in steps c and/or d is effected by immersing the substrate layer (S) in the composition A1 and/or composition A2. Preferably the remaining composition A1 and/or A2 on the substrate layer (S) after step c and/or d) are wiped out after immersing. Typically, the contacting time of substrate layer (S) in the composition A1 is in the range of 0.1 to 30 minutes (min). Typically, the contacting time of substrate layer (S) in the composition A2 is in the range of 5 to 240 seconds (s).

In the inventive method as mentioned above the substrate layer (S) and/or the composite membrane can optionally be treated in a conditioning step after the steps b and/or d, wherein conditioning steps can be selected from cleaning, washing, drying and cross-linking.

Preferably after steps b the obtained substrate layer (S) is washed and dried. Preferably, after step d the composite membrane is washed and/or dried (e.g. in air) at a temperature in the range of 30 to 150 °C, preferably at 50 to 100°C, preferably at 50 to 70°C. Typically the composite membrane is washed and/or dried for 10 s to 30 min.

The obtained composite membrane is typically washed and kept in water prior to use.

Furthermore, the present invention is directed to a process of forward osmosis comprising the following steps:

a) supplying at least one composite membrane (TFC membrane) described above;

b) bringing the composite membrane in contact with at least one aqueous draw solution on one side of composite

membrane and with at least one aqueous feed solution on the other side of composite membrane, wherein water is transported from the feed to the draw solution.

The term "forward osmosis (FO)" in terms of the present invention describes a process, wherein the osmotic pressure as a driving force allows water to diffuse through a semi-permeable membrane from the so called feed solution to a so called draw solution, wherein the feed solution exhibits a relatively lower salt concentration as the draw solution.

Further the present invention is directed to the use of inventive composite membrane in a forward osmosis process for waste water treatment, seawater desalination, concentration of pharmaceutical compositions, concentration of food compositions, water reclamation from wastewaters, power generation and potable water reuse devices, preferably for waste water treatment and seawater desalination.

Brief description of the Figures:

The Figures 1a-d; 2 a-d, and 3 a-d show typical morphologies of membrane substrates from non-sulfonated PPSU and sulfonated PPSU (sPPSU-2.5 and sPPSU-5). The macrovoid-free sponge like structures of substrate layers based on sPPSU-2.5 and sPPSU-5 can for example be seen in the enlarged picture of the cross-section of substrate layer (S) (Figures 2d and 3d). The Figures 4 a-b show typical morphology of TFC-FO membrane including substrate layers based on sPPSU-2.5%.

Figure 1 shows the FESEM (Field Emission Scanning Electron Microscopy) picture of the substrate layer (S) consisting of non-sulfonated polyphenylenesulfone (PPSE) as follows:

Figure 1a: Top surface (5.0 kV; x50,000 magnification; WD 7.6 mm);
Figure 1b: Bottom surface (5.0 kV; x50,000 magnification; WD 7.6 mm);
Figure 1c: Cross section (5.0 kV; x1,500 magnification; WD 7.9 mm);
Figure 1d: Bottom surface, lower magnification (5.0 kV; x5,000 magnification; WD 7.6 mm).

Figure 2 shows the FESEM picture of the substrate layer (S) consisting of sulfonated polyphenylenesulfone (sPPSU-2.5%) according to Example 2 as follows:

Figure 2a: Top surface (5.0 kV; x50,000 magnification; WD 7.7 mm)
Figure 2b: Bottom surface (5.0 kV; x50,000 magnification; WD 7.7 mm)
Figure 2c: Cross section (5.0 kV; x1,500 magnification; WD 7.9 mm)
Figure 2d: Cross-section with higher magnification (5.0 kV; x50,000 magnification; WD 7.9 mm)

Figure 3 shows the FESEM picture of the substrate layer (S) consisting of sulfonated polyphenylenesulfone (sPPSU-5%) according to Example 2 as follows:

Figure 3a: Top surface (5.0 kV; x50,000 magnification; WD 7.2 mm)
Figure 3b: Bottom surface (5.0 kV; x50,000 magnification; WD 7.4 mm)
Figure 3c: Cross section (5.0 kV; x1,500 magnification; WD 7.9 mm)
Figure 3d: Cross-section with higher magnification (5.0 kV; x50,000 magnification; WD 7.9 mm)

Figure 4 shows the typical FESEM images of TFC-FO membranes including a substrate layer based on sPPSU-2.5% according to Example 3 as follows:

Figure 4a: Top surface (5.0 kV; x50,000 magnification; WD 7.6 mm)
Figure 4b: Cross section (TFC layer is marked) (5.0 kV; x50,000 magnification; WD 7.7 mm)

Figure 5 shows schematically the layout of the lab-scale circulating filtration unit used for testing the composite membranes, wherein the references have the following meaning:

(1) crossflow permeation cell;

(2) feed solution in storage tank;

(3) draw solution in storage tank;

(4) flow meters;

(5) pumps;

(6) measurement devices of temperature and pressure;

(7) balance;

(8) computer.

The present invention is described in more detail by the following examples and claims.

Example 1 - Preparation of membrane substrate layer (S) polymers

a) sPPSU-2,5%

In a 4 l HWS-vessel with stirrer, Dean-Stark-trap, nitrogen-inlet and temperature control, 1,99 mol Dichlorodiphenylsulfone (DCDPS), 2,00 mol 4,4'-Dihydroxybiphenyl (DHBP), 0,05 mol 3,3'-Di-sodiumdisulfate-4,4'-dichlorodiphenylsulfone und 2,12 mol Potassiumcarbonate (Particle size 36,2 μm) were suspended under nitrogen atmosphere in 2000 ml NMP. Under stirring the mixture was heated up to 190°C. 30 l/h nitrogen was purged through the mixture and the mixture was kept at 190°C for 6 h. After that time 1000 ml NMP were added to cool down the mixture. Under nitrogen the mixture was allowed to cool down below 60°C. After filtration the mixture was precipitated in water which contains 100 ml 2m HCl. The precipitated product was extracted with hot water (20 h at 85°C) and dried at 120°C for 24 h under reduced pressure.
Viscosity number: 88.7 ml/g (1 wt.-/vol% solution in N-Methylpyrrolidon(NMP) at 25°C).
The content of the sDCDPS monomer was estimated taking the S-content of the polymer to be 2.4 mol-%. The prepared sulfonated polyphenylenesulfone P1 is referred to as sPPSU-2.5%.

b) sPPSU-5%

In a 4 l HWS-vessel with stirrer, Dean-Stark-trap, nitrogen-inlet and temperature control, 1,90 mol Dichlorodiphenylsulfone (DCDPS), 2,00 mol 4,4'-Dihydroxybiphenyl (DHBP), 0,1 mol 3,3'-Di-sodiumdisulfate-4,4'-dichlorodiphenylsulfone (sDCDPS) und 2,12 mol Potassiumcarbonate (Particle size 36,2 μm) were suspended under nitrogen atmosphere in 2000 ml NMP. Under stirring the mixture was heated up to 190°C. 30 l/h nitrogen was purged through the mixture and the mixture is kept at 190°C for 6 h. After that time 1000 ml NMP were added to cool down the mixture. Under nitrogen the mixture was allowed to cool down below 60°C. After filtration the mixture was precipitated in water which contains 100 ml 2m HCl. The precipitated product was extracted with hot water (20 h at 85°C) and dried at 120°C for 24 h under reduced pressure.
Viscosity number: 83.2 ml/g (1 wt.-/vol% solution in N-Methylpyrrolidon at 25°C).
The content of the sDCDPS monomer was estimated taking the S-content of the polymer to be 4.7 mol-%. The prepared polymer is referred to as sPPSU 5 %.

Example 2 - Production of substrate layer (S) based on sulfonated polyphenylensulfones sPPSU-2,5% and sPPSU-5%

N-methyl-2-pyrrolidone (NMP) from Merck and ethylene glycol (EG) from Sigma Aldrich were employed as the solvent and additive, respectively, in the fabrication of substrates. The composition of each dope solution was polymer/EG/NMP (wt%)=13/16/71.
Casting solutions were prepared by dissolving according amounts of polymers sPPSU 2.5% and sPPSU-5% as prepared in Example 1 in N-methyl pyrrolidone (NMP>99.5%) under addition of 16 wt% ethylene glycol (EG). The casting solutions were allowed to degas overnight prior casting. The polymer solutions were then cast on a glass plate via phase inversion method using casting knife of 100 μm in thickness to form a homogeneous membrane substrate.
Thereafter, the as-cast membrane substrate layer was immersed into a water coagulation bath immediately at room temperature to conduct solvent exchange process and to form a hydrophilic porous substrate. The as-cast membranes were kept for 1 day in water bath to ensure complete precipitation.
During the precipitation process, it can be observed that membranes cast from sPPSU materials with 2.5 and 5 mol% DCDPS show slower precipitation rates as compared to that of non-sulfonated PPSU materials. This is a common phenomenon since the sulfonated materials tend to facilitate delayed demixing as compared to that of non-sulfonated ones.

c) Characterization of support layers

The water permeability of the support layers prepared from sPPSU-2.5% and sPPSU-5% using pure water (pure water permeability, PWP) and the molecular weight cut off (MWCO) were determined.

The PWP and MWCO values are summarizes in Table 1:

Table 1: Pure water permeability (PWP) and molecular weight cut off (MWCO) of inventive substrate layers (S).

| | sPPSU-2,5% | sPPSU-5% |
|---|---|---|
| PWP [l/($m^2$ bar h)] | 846.1 | 241.3 |
| MWCO [Da] | 195423 | 169913 |

The morphology of as-cast membrane substrate (substrate layer (S)) was analyzed by scanning electron microscopy FESEM (top surface, bottom surface and cross section). A fully spounge-like structure without macrovoids was obtained.

Figures 1 to 3 shows the SEM images of substrate layers (S) with non-sulfonated and sulfonated materials. As expected, the membrane from non-sulfonated PPSU (Fig. 1) exhibits numerous macrovoids due to instantaneous demixing, while those from sulfonated PPSU of the present invention (Fig. 2 and 3) display a fully sponge-like and interconnected pore structures with no observed macrovoids.

It also can be observed that the bottom surfaces of membranes from sulfonated materials are fully porous. The typical membrane morphology as shown in Fig. 2 and 3 is highly favourable for forward osmosis (FO). In addition, they also exhibit more hydrophilic properties and higher porosity as compared to that of non-sulfonated one.

Comparative Example 2 - Production of substrate layer based on blend of sulfonated polyarylethers and unsulfonated polyarylethers

A casting solution of a non-sulfonated polyethersulfone (PESU) and a sulfonated copolymer of a polyethersulfone (PESU) and a polyphenylensulfone PPSU was produced showing a ratio of said polymers of 50/50wt%.

The non-sulfonated polyethersulfone was produced using the monomers dichlorodiphenylsulfone (DCDPS) and dihydroxy-diphenylsulfone (DHDPS). The sulfonated polyethersulfon/polyphenylensulfone copolymer (polymer P1) comprised recurring units according to the following formula

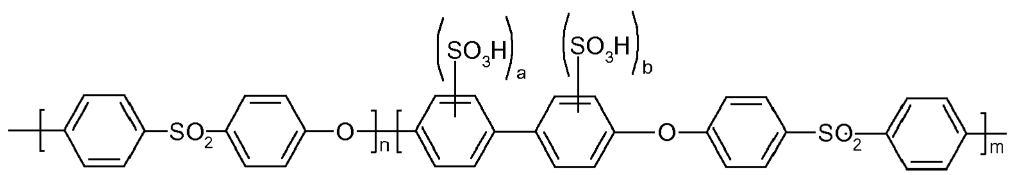

,

wherein the sulfonated copolymer exhibits 11,5 wt% of sulfonated units (sulfonated PPSU units) based on the weight of the polymer.

A casting solution of 8 wt% of PESU and 8 wt% of sulfonated copolymer (PESU and PPSU) was prepared as described in Example 2. A substrate layer was prepared by casting as described in Example 2 using 100 micron casting knife.

Water permeability of the support membrane substrate using pure water and the molecular weight cut off (MWCO) were determined. The pure water permeability (PWP) of the support membrane substrate was 188.63 L/($m^2$ h bar) and molecular weight cut off (MWCO) was 414,829 Da.

Example 3 - Production of thin film composite (TFC) membrane

The substrate (substrate layer (S)) based on sulfonated sPPSU-2.5% as produced in Example 2 was used for formation of a thin polyamide layer (film layer (F)). The formation of a polyamide layer onto the substrate layer was based on the interfacial polymerization. The substrate layer was first immersed in 2 wt.-% MPD (meta-phenylenediamine) solution in deionized water (DI water) for 2 minutes. Thereafter, filter paper was used to remove the water droplets on the membrane surface. Subsequently, the top surface of the membranes was brought into contact with the 0,05 wt.% TMC (trimesoylchloride) solution in n-heptane for 15 seconds. After this process, a thin polyamide film (film layer (F))

was formed on the substrate layer (S). The resultant membrane (thin film composite membrane TFC) was further dried in the air for 10 minutes and cleaned in deionized water before use in forward osmosis processes (FO) (see Example 4).

The morphology of membrane was analyzed by scanning electron microscopy (FESEM), wherein the cross section and top surface of thin film layer composite membrane were analyzed. It was observed that the thickness of thin polyamide film was approximately 150-200 nm. The FESM images of TFC-FO membranes are shown in Figure 4 (4a top surface and 4b cross section).

Comparative Example 3 - Production of thin film composite (TFC) membrane

The substrate layer based on a blend of non-sulfonated polymers and sulfonated polyarylether as produced in Comparative Example 2 was used for formation of a thin polyamide layer. The formation of a polyamide layer onto the substrate layer was carried out as described in Example 3.

RO (reverse osmosis) test for this composite membrane (at 50 psi and 400 ppm NaCl) showed PWP (pure water permeability) of 0.73±0.016 L/($m^2$·bar·hr) and salt rejection of 91±0.21%.

Example 4 - Forward osmosis process using inventive thin film composite membrane

The thin film composite membrane produced as described in Example 3 based on sPPSU-2,5% was tested in a forward osmosis (FO) experiment.

FO experiments were conducted on a lab-scale circulating filtration unit. The schematic diagram of the filtration unit is shown in Figure 5.

The crossflow permeation cell (1) was a plate and frame design with a rectangular channel on each side of the membrane. The feed solution (2) and the draw solution (3) were in storage tanks and circulated via pumps (5). The solution flows were adjusted using flow meters (4). The solution flow velocities during the FO process were kept at 6.4 cm/s for both feed solution (2) and draw solution (3) which was co-currently flowed through the cell channels.

The temperature and the pressure of each solution were measured (6). The temperatures of the feed and draw solutions were maintained at 22 ± 0.5°C. The pressures at two channel inlets were kept at 1.0 psi.

The membranes were tested under two different modes:

(1) draw solution against the dense selective layer (film layer (F)) (pressure retarded osmosis/PRO mode) and
(2) feed water side against the dense selective layer (film layer (F)) (FO mode).

The draw solutions with different concentrations were prepared from sodium chloride (NaCl) solutions and used in FO process. The change of draw solution concentration was ignored because the ratio of water permeation flux to the volume of the draw solution was less than 2% during the FO process.

Deionized water (DI water) was used as the feed solution. In this case the salt leakage can be calculated by measuring the conductivity in the feed solution at the end of experiment. A balance (7) (EK-4100i, A & D Company Ltd., Japan) connected to a Computer (8) recorded down the mass of water permeating into the draw solution over a selected period of time.

The water permeation flux was then calculated based on the weight changes of feed water. The water permeation flux $J_v$ (in L·$m^{-2}$·$h^{-1}$ (liter over square meter and hour) abbreviated as LMH) was calculated from the volume change of feed or draw solution using the following formula (f1):

$$J_v = \Delta V/(A\cdot\Delta t) \qquad (f1)$$

wherein:

| | |
|---|---|
| ΔV (in liter (L)) | is the permeation water collected over a predetermined time Δt (in hours (hr)) in the FO process duration; |
| A | is the effective membrane surface area (in square meter $m^2$). |

The salt concentration in the feed water was determined from the conductivity measurement in the feed solution using a calibration curve for the single salt solution. The salt leakage $J_s$, which is the salt back-diffusion from the draw solution to the feed solution (in g $m^{-2}$·$h^{-1}$ (gram over square meter and hour) abbreviated as gMH), was thereafter determined from the increase of the feed conductivity using the following formula (f2):

$$J_s = \Delta(C_t \cdot V_t)/(A \cdot \Delta t) \qquad (f2)$$

wherein:

$C_t$ and $V_t$ are the salt concentration and the volume of the feed at the end of FO process, respectively.

The water flux and salt leakage of new composite membranes in the FO mode and the PRO mode are summarized in Table 2. Deionized water (DI water) was used as feed and NaCl solutions with varying concentrations were used as draw solutions.

Table 2: Water flux and salt leakage of inventive composite membrane using DI water as feed in FO and PRO mode.

| | FO mode | | PRO mode | |
|---|---|---|---|---|
| Conc. of NaCl draw solution [mol/l] | Water flux [LMH] | Salt leakage [gML] | Water flux [LMH] | Salt leakage [gML] |
| 0,5 | 30 | 5,2 | 32 | 4,8 |
| 1 | 40 | 7,2 | 42 | 7,0 |
| 2 | 48 | 7,6 | 54 | 8,3 |
| 3 | 54 | 11,2 | 70 | 13,2 |
| 4 | 64 | 14,4 | 84 | 18,2 |

The obtained values for the water flux are significantly higher than for the comparative membranes (see Table 3).

Comparative Example 4 - Forward osmosis process using comparative thin film composite membrane

The thin film composite membrane produced as described in Comparative Example 3 was tested in a forward osmosis (FO) experiment. FO experiments were conducted on a lab-scale circulating filtration unit as described in Example 4.

The water flux and salt leakage of comparative membrane in the FO mode and the PRO mode with varying draw solution concentration (NaCl concentrations) are summarized in Table 3:

Table 3: Water flux and salt leakage of comparative composite membrane using DI water as feed in FO and PRO mode.

| | FO mode | | PRO mode | |
|---|---|---|---|---|
| Concentration of NaCl draw solution [mol/L] | Water flux [LMH] | Salt leakage [gML] | Water flux [LMH] | Salt leakage [gML] |
| 0.5 | 15 | 2.5 | 16 | 3 |
| 1 | 22 | 3.5 | 24 | 4.5 |
| 2 | 26 | 4.5 | 33 | 6 |
| 3 | 30 | 9 | 46.5 | 9 |
| 4 | 33 | 9 | 54 | 10 |
| 5 | 39 | 9.5 | 57 | 12.5 |

Example 5 - Forward osmosis of inventive membrane process using sea water

A forward osmosis process using the thin film composite membrane produced as described in Example 3 using sPPSU-2.5% as substrate was carried out similar to Example 4. Seawater was used as feed solution instead of deionized water. The feed solution concentration consisted of 3.5 wt% NaCl and the draw solution concentration (NaCl) was varied from 2 M (mol/L) to 5 M (mol/L).

The water flux in the FO mode and the PRO mode using varying draw solution concentration (NaCl) are summarized in Table 4:

Table 4: Water flux of inventive composite membrane using sea water (3.5 wt % NaCl solution) as feed in FO and PRO mode.

| | FO mode | PRO mode |
|---|---|---|
| Concentration of NaCl draw solution [mol/L] | Water flux [LMH] | Water flux [LMH] |
| 2 | 22.0 | 22.0 |
| 3 | 26.0 | 32.0 |
| 4 | 32.0 | 38 |
| 5 | 38 | 42.0 |

Again, the membrane based on the new substrate performs better than the membrane described in the comparative Examples (see Table 5).

It can be found that the water flux of thin film composite FO membrane can reach 42 LMH using 5M NaCl as draw solution tested under PRO mode.

Comparative Example 5 - Forward osmosis of comparative membrane process using sea water

A forward osmosis process using the thin film composite membrane produced as described in Comparative Example 3 was carried out as described in Example 5.

The water flux in the FO mode and the PRO mode using varying draw solution concentration (NaCl) are summarized in Table 5:

Table 5: Water flux of comparative composite membrane using sea water (3,5 wt % NaCl solution) as feed in FO and PRO mode.

| | FO mode | PRO mode |
|---|---|---|
| Concentration of NaCl draw solution [mol/L] | Water flux [LMH] | Water flux [LMH] |
| 2 | 13.5 | 15 |
| 3 | 19.5 | 21 |
| 4 | 22.5 | 25.5 |
| 5 | 25.5 | 27.0 |

## Claims

**1.** Composite membrane comprising:

a) at least one substrate layer (S) comprising:

at least one sulfonated polyphenylenesulfone P1, which comprises from 1 to 10 mol-%, based on the total polymer P1, of recurring units comprising at least one sulfonic acid group;

b) at least one film layer (F) comprising at least one polyamide.

**2.** Composite membrane according to claim 1, wherein the at least one sulfonated polyphenylenesulfone P1 comprises recurring units according to following formula (1):

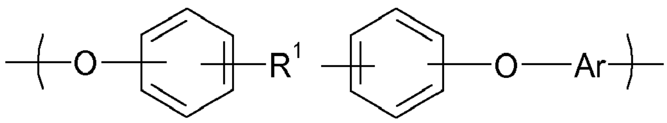

(1),

wherein

$R^1$ is C=O or $-SO_2-$;
Ar is a divalent aromatic radical having 10 to 20 aromatic ring carbon atoms, wherein the aromatic radical is optionally substituted by one or more groups selected from $C_1$-$C_{12}$-alkyl, $C_6$-$C_{18}$ aryl, $C_1$-$C_{12}$-alkoxy, halogen and sulfonic acid group.

**3.** Composite membrane according to any of claims 1 or 2, wherein the at least one sulfonated polyphenylenesulfone P1 comprises recurring units according to following formula (2):

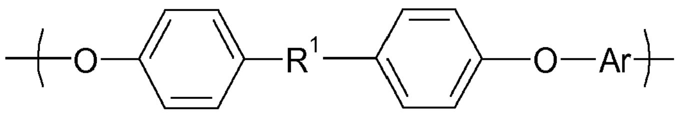

(2),

wherein:

$R^1$ is $-SO_2-$; and
Ar is a biphenyl radical of the formula (3)

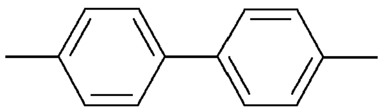

(3),

which is optionally substituted by one or more groups selected from $C_1$-$C_{12}$-alkyl, $C_6$-$C_{18}$ aryl, $C_1$-$C_{12}$-alkoxy, halogen and sulfonic acid group;
wherein the aromatic rings of the recurring unit according to formula (2) may further carry one or more same or different substituents selected from $C_1$-$C_{12}$-alkyl, $C_6$-$C_{18}$ aryl, $C_1$-$C_{12}$-alkoxy, halogen and sulfonic acid group;
and wherein from 1 to 10 mol-% of the recurring units, based on the total polymer P1, comprise at least one sulfonic acid group.

**4.** Composite membrane according to any of claims 1 to 3, wherein the at least one sulfonated polyphenylenesulfone P1 comprises
at least one non-sulfonated repeating unit according to formula (4)

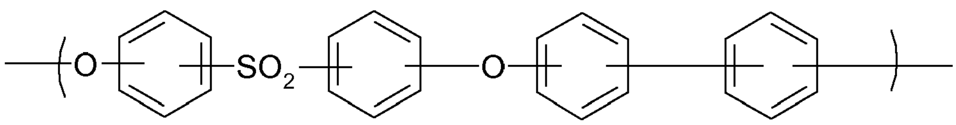

(4)

and at least one sulfonated repeating unit according to formula (5)

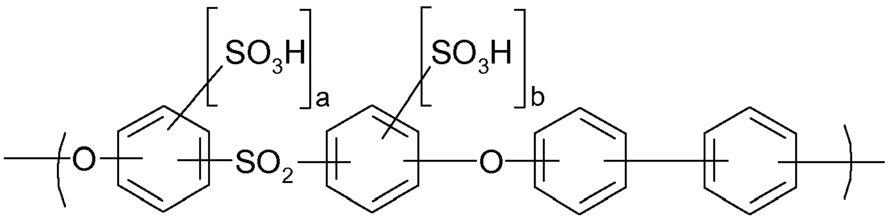

(5)

with

a and b independently of one another, are an integer from 0 to 4, with the proviso that both a and b are not 0.

**5.** Composite membrane according to any of claims 1 to 4, wherein at least one polyphenylenesulfone P1 is obtainable by polymerizing of at least one non-sulfonated monomer and at least one sulfonated monomer.

**6.** Composite membrane according to any of claims 1 to 5, wherein the at least one polyphenylenesulfone P1 is obtainable by polymerizing of

i) at least one non-sulfonated monomer of the general formulae M1 a and/or M2a

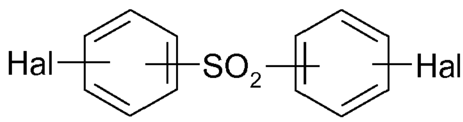

(M1a)

HO—Ar—OH (M2a)

wherein

Ar is a divalent aromatic radical having 10 to 20, aromatic ring carbon atoms, wherein the aromatic radical is optionally substituted by one or more groups selected from $C_1$-$C_{12}$-alkyl, $C_6$-$C_{18}$ aryl, $C_1$-$C_{12}$-alkoxy, and halogen;
Hal is F, Cl, Br or J;

and
ii) at least one sulfonated monomer of the general formulae M1 b and/or M2b

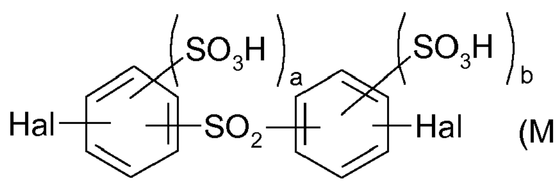

(M1b)

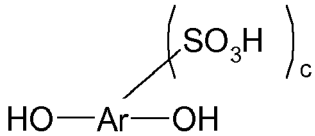

(M2b)

wherein

Ar is a divalent aromatic radical having 10 to 20, aromatic ring carbon atoms, wherein the aromatic radical is optionally substituted by one or more groups selected from $C_1$-$C_{12}$-alkyl, $C_6$-$C_{18}$ aryl, $C_1$-$C_{12}$-alkoxy, and halogen;
Hal is F, Cl, Br or J;
a, b and c are independently of one another, are an integer from 0 to 4, with the proviso that a + b + c is not 0.

**7.** Composite membrane according to any of claims 1 to 6, wherein the at least one polyamide is poly-metaphenylene isophtalamide (MPIA) and/or a poly-paraphenylene terephtalamide (PPTA).

**8.** Method for preparation of a composite membrane, which comprises at least one substrate layer (S) and at least one film layer (F), comprising the following steps:

a) preparing a polymer composition (P) comprising:

i) at least one sulfonated polyphenylenesulfone P1, which comprises 1 to 10 mol-%, based on the total polymer P1, recurring units comprising at least one sulfonic acid group;
ii) at least one solvent S1;
iii) optional at least one further additive selected from the group consisting of ethylene glycol, diethylene glycol, polyethylene glycol, glycerol, water, methanol, ethanol, isopropanol, polyvinylpyrrolidon, metal halide;

b) separating the polymer P1 from the solvent S1 to form a substrate layer (S);
c) bringing the substrate layer (S) into contact with a composition A1 comprising at least one polyamine monomer having at least two amine groups and at least one solvent S2;
d) bringing the substrate layer (S) into contact with a composition A2 comprising at least one polyacylhalide monomer having at least two acyl halide groups and at least one solvent S3 to form a film layer (F) onto the substrate layer (S), wherein a composite membrane is obtained.

**9.** Method for preparation of a composite membrane according to claim 8, wherein the polymer composition (P) comprises:

i) 5 to 25 wt% of at least one sulfonated polyphenylenesulfone P1;
ii) 75 to 95 wt% of at least one solvent S1 selected from the group consisting of N-methylpyrrolidone, N-dimethylacetamide, dimethylsulfoxide, dimethylformamide, triethylphosphate, tetrahydrofuran, 1,4-dioxane, and methyl ethyl ketone;
iii) optionally 0 to 20 wt% of at least one further additive selected from the group consisting of ethylene glycol, diethylene glycol, polyethylene glycol, glycerol, water, methanol, ethanol, isopropanol, polyvinylpyrrolidon, metal halide.

**10.** Method for preparation of a composite membrane according to any of claims 8 or 9, wherein the separating of the sulfonated polyphenylenesulfone P1 from the solvent S1 in step b is effected by the following steps:

- applying the polymer composition (P) onto a support;
- adding a coagulation composition (C) comprising at least one $C_1$-$C_{12}$ aliphatic alcohol and/or water and/or at least one further additive selected from the group consisting of ethylene glycol, diethylene glycol, polyethylene glycol, glycerol, water, methanol, ethanol, isopropanol, polyvinylpyrrolidon, metal halide to the polymer composition (P) by forming the substrate layer (S).

**11.** Method for preparation of a composite membrane according to any of claims 8 to 10, wherein the composition A1 comprises from 0.5 to 5 wt% of at least one polyamine monomer selected from the group consisting of phenylenediamine, phenylenetriamine, cyclohexane triamine, cyclohexane diamine, piperazine, and bi-piperidine and at least one solvent S2 comprising at least 50 wt% water.

**12.** Method for preparation of a composite membrane according to any of claims 8 to 11, wherein the composition A2 comprises from 0.01 to 4 wt% of at least one polyacylhalide monomers selected from the group consisting of phthaloyl chloride, isophthaloyl chloride, terephthaloyl chloride, and trimesoyl chloride,and at least one hydrocarbon solvent S3.

**13.** Method for preparation of a composite membrane according to any of claims 8 to 12, wherein bringing the substrate

layer (S) into contact with a composition A1 and/or A2 in steps c and/or d is effected by immersing the substrate layer (S) in the composition A1 and/or composition A2.

**14.** Process of forward osmosis comprising the following steps:

a) supplying at least one composite membrane according to any of claims 1 to 7;
b) bringing the composite membrane in contact with at least one aqueous draw solution on one side of composite membrane and with at least one aqueous feed solution on the other side of composite membrane, wherein water is transported from the feed to the draw solution.

**15.** Use of a composite membrane according to any of claims 1 to 7 in a forward osmosis process for waste water treatment, seawater desalination, concentration of pharmaceutical compositions, concentration of food compositions, water reclamation from wastewaters, power generation and potable water reuse devices.

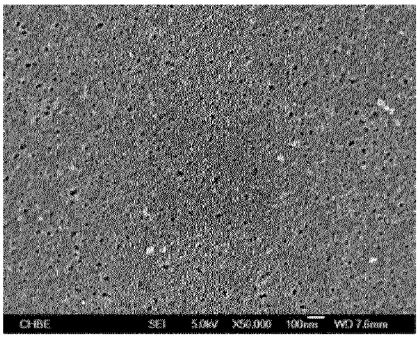

100 nm

Fig. 1a

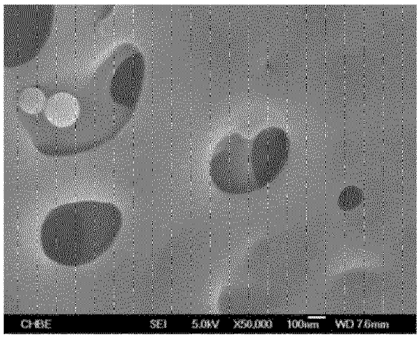

100 nm

Fig. 1b

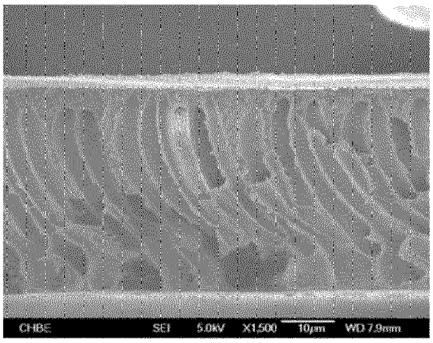

10 µm

Fig. 1c

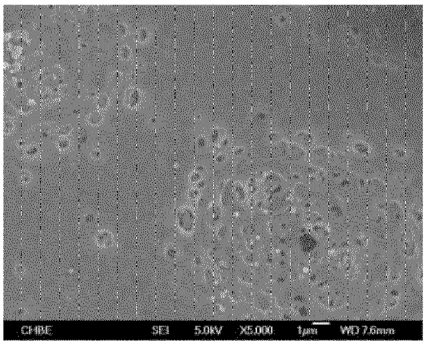

1 µm

Fig. 1d

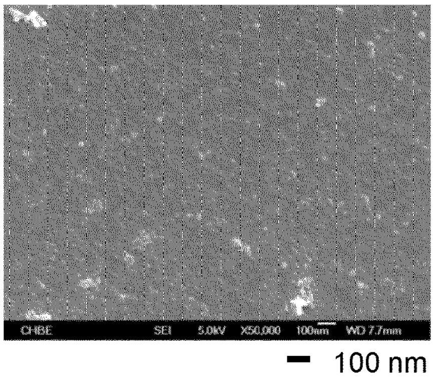


Fig. 2a

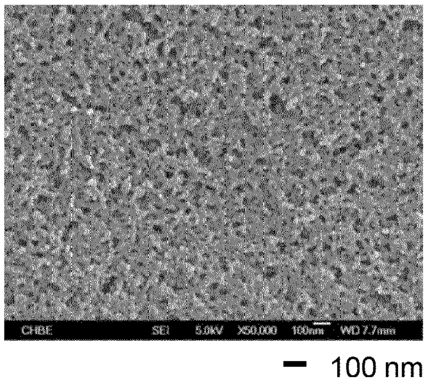


Fig. 2b

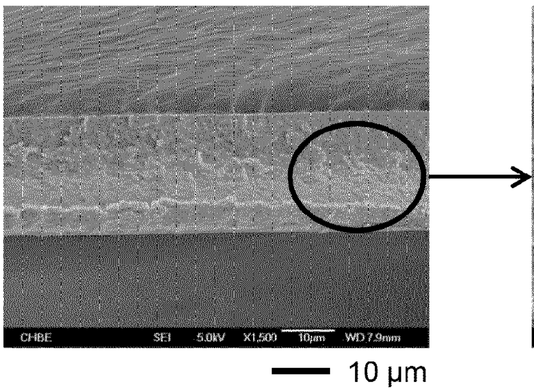


Fig. 2c

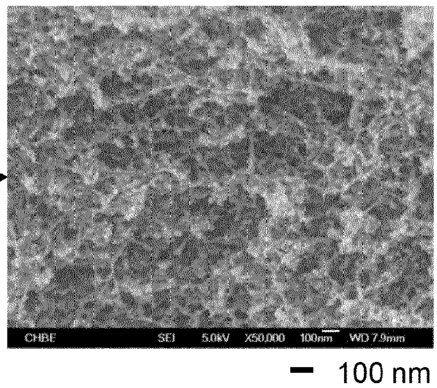


Fig. 2d

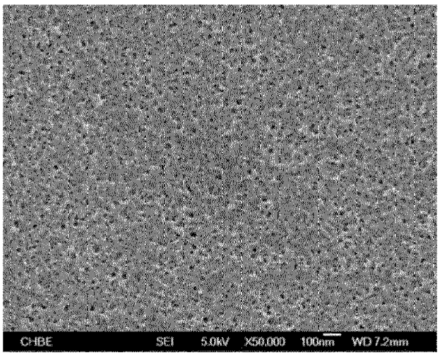


100 nm

Fig. 3a

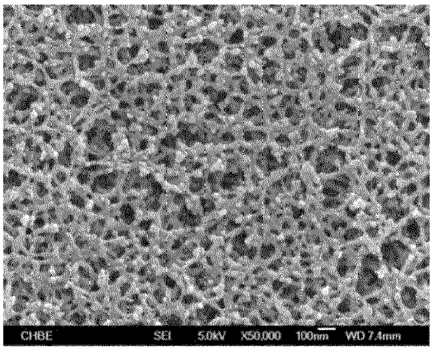


100 nm

Fig. 3b

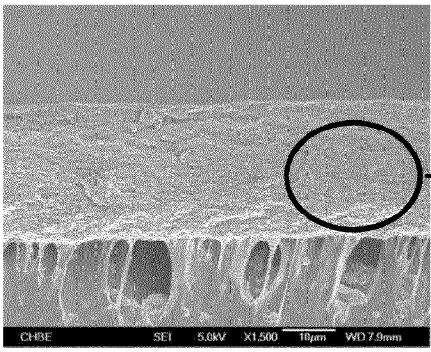


10 μm

Fig. 3c

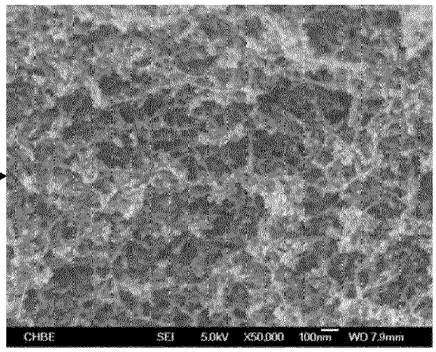


100 nm

Fig. 3d

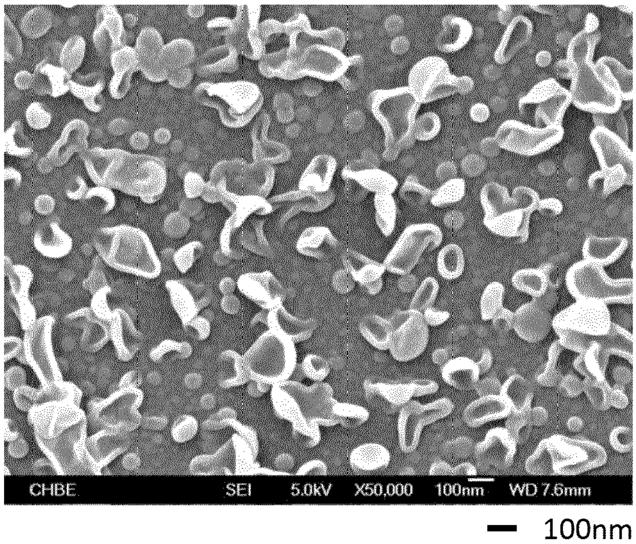
CHBE SEI 5.0kV X50,000 100nm WD 7.6mm
100nm

Fig. 4a

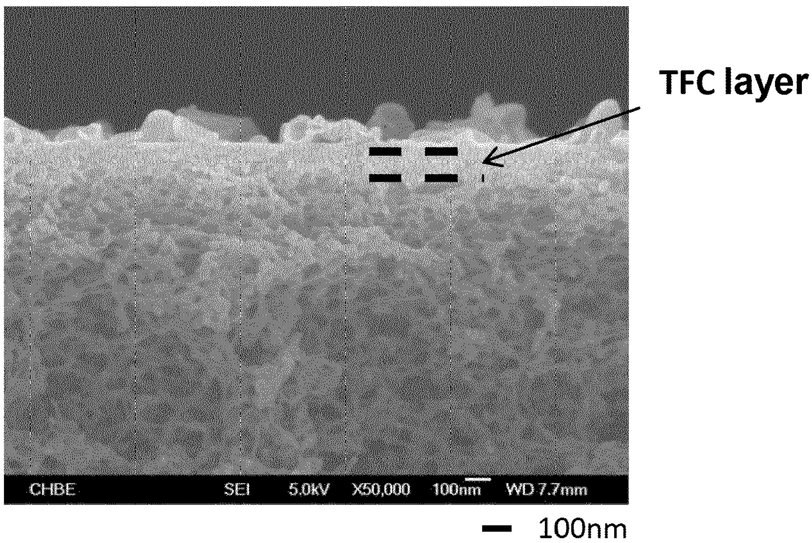
TFC layer
CHBE SEI 5.0kV X50,000 100nm WD 7.7mm
100nm

Fig. 4b

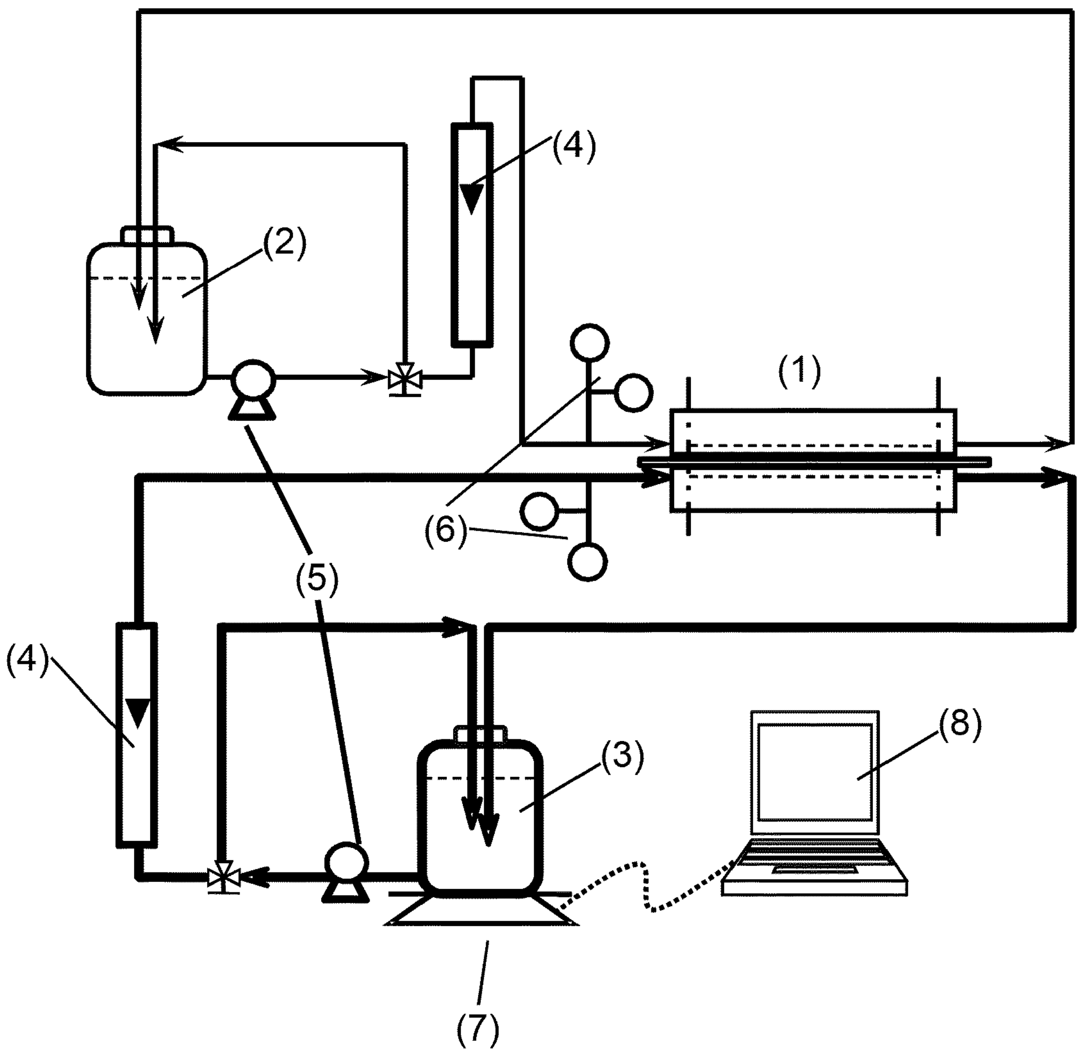


Fig. 5

Europäisches Patentamt
European Patent Office
Office européen des brevets

# EUROPEAN SEARCH REPORT

Application Number
EP 12 17 1998

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | NATALIA WIDJOJO ET AL: "The role of sulphonated polymer and macrovoid-free structure in the support layer for thin-film composite (TFC) forward osmosis (FO) membranes", JOURNAL OF MEMBRANE SCIENCE, ELSEVIER SCIENTIFIC PUBL.COMPANY. AMSTERDAM, NL, vol. 383, no. 1, 21 August 2011 (2011-08-21), pages 214-223, XP028306478, ISSN: 0376-7388, DOI: 10.1016/J.MEMSCI.2011.08.041 [retrieved on 2011-08-26] * the whole document * ----- | 1-15 | INV. B01D69/12 |
| X | US 2012/043274 A1 (CHI SUNG DAE [KR] ET AL) 23 February 2012 (2012-02-23) * formula 2,; example 12; table 3 * ----- | 1-15 | |
| X | KAI YU WANG ET AL: "Developing thin-film-composite forward osmosis membranes on the PES/SPSf substrate through interfacial polymerization", AICHE JOURNAL, AMERICAN INSTITUTE OF CHEMICAL ENGINEERS (AICHE) , vol. 58, no. 3 1 March 2012 (2012-03-01), pages 770-781, XP002678804, ISSN: 0001-1541, DOI: 10.1002/AIC.12635 Retrieved from the Internet: URL:http://onlinelibrary.wiley.com/doi/10.1002/aic.12635/abstract [retrieved on 2011-04-22] * abstract * * Experimental, * * the whole document * ----- -/-- | 1-15 | TECHNICAL FIELDS SEARCHED (IPC) B01D |

The present search report has been drawn up for all claims

2

| Place of search | Date of completion of the search | Examiner |
|---|---|---|
| Munich | 30 August 2012 | Hennebrüder, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 12 17 1998

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHANG HYUN LEE ET AL: "Disulfonated poly(arylene ether sulfone) random copolymer thin film composite membrane fabricated using a benign solvent for reverse osmosis applications", JOURNAL OF MEMBRANE SCIENCE, ELSEVIER SCIENTIFIC PUBL.COMPANY. AMSTERDAM, NL, vol. 389, 1 November 2011 (2011-11-01), pages 363-371, XP028394237, ISSN: 0376-7388, DOI: 10.1016/J.MEMSCI.2011.11.001 [retrieved on 2011-11-07] * abstract * * Sections 2.1, 2.2, 2.3 * ----- | 1-15 | |
| A | KANG M-S ET AL: "Electrochemical characterization of sulfonated poly(arylene ether sulfone) (S-PES) cation-exchange membranes", JOURNAL OF MEMBRANE SCIENCE, ELSEVIER SCIENTIFIC PUBL.COMPANY. AMSTERDAM, NL, vol. 216, no. 1-2, 1 May 2003 (2003-05-01), pages 39-53, XP004422228, ISSN: 0376-7388, DOI: 10.1016/S0376-7388(03)00045-0 * abstract * * section 2.1; figure 3 * ----- | 1-15 | TECHNICAL FIELDS SEARCHED (IPC) |

The present search report has been drawn up for all claims

2

| Place of search | Date of completion of the search | Examiner |
|---|---|---|
| Munich | 30 August 2012 | Hennebrüder, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 12 17 1998

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2012

| Patent document cited in search report | Publication date | Patent family member(s) | Publication date |
|---|---|---|---|
| US 2012043274 A1 | 23-02-2012 | US 2012043274 A1 | 23-02-2012 |
| | | WO 2011136465 A2 | 03-11-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009030620 A
- WO 2010142585 A
- EP 2010057591 W
- EP 1394879 A
- WO 2010145052 A


### Non-patent literature cited in the description


- **T.Y. CATH ; A.E. CHILDRESS.** Forward osmosis: Principles, applications, and recent developments. *J. Membr. Sci.,* 2006, vol. 281, 70
- **M. ELIMELECH.** High Performance thin-film composite forward osmosis membranes. *Environ. Sci. Technol.,* 2010, vol. 44 (3812
- **N. WIDJOJO et al.** *Journal of Membrane Science,* 2011, vol. 338, 214-223
- **JOHNSON et al.** *J. Polym. Sci. A-1,* 1967, vol. 5, 2375
- **UEDA et al.** *J. Polym. Sci., Part A: Polym. Chem.,* 1993, vol. 3, 853
- **HARRISON et al.** *Polymer preprints,* 2000, vol. 41 (2), 1239
- **GEISE, G.M. et al.** *J. Poly. Sci, Part B: Polym Phys.,* 2010, vol. 48, 1685